# EUROPEAN PATENT SPECIFICATION

(11) **EP 1 204 013 B1**
(45) Date of publication and mention of the grant of the patent: **07.04.2004**
(21) Application number: 00122680.2
(22) Date of filing: 18.10.2000
(51) Int. Cl.: G05D 23/19

(54) **Improved thermostating device especially for radiators**
Thermostatvorrichtung insbesondere für Heizkörper
Appareil thermostatique en particulier pour radiateurs

(43) Date of publication of application: 08.05.2002
(73) Proprietor: HT S.p.A., 31058 Susegana (TV) (IT)
(72) Inventor: Gianoglio, Franco, 31015 Conegliano (TV) (IT)
(74) Representative: De Gregori, Antonella

(56) References cited:
- DE-A- 19 855 926
- US-A- 4 212 346
- US-A- 4 460 944

## Description

This invention offers an improved thermostating device, applicable in particular to radiators or other similar heat production devices. In particular it relates to a thermostating device which not only controls the operating temperature of the radiator, but also presents the risk of overheating of the resistor and operation of the protective thermofuse.

The thermostating device in accordance with the invention improves the operating conditions of the thermostat in a simple but functional way, and prevents damage if the radiator operates without water. In known electrically powered heat-producing devices such as electric radiators and the like, the heating means used is an electrical immersion resistor, usually located in one of the radiator columns, which is immersed in the fluid that constitutes the means of propagation and diffusion of the heat developed.

The operation of the electrical resistor is monitored by a thermostat which comes into operation when the fluid temperature exceeds a preset threshold value, and cuts off the power until the fluid temperature falls.

Traditional thermostating systems usually comprise a thermostat fitted in the body, which also contains the heating element, usually constituted by a resistive coil; the thermostat is positioned at a distance from the electrical resistor so that the operating temperature of the fluid can be detected without alterations caused by the direct action of the heating element.

Under most operating conditions, this thermostating system operates correctly, and the heat exchangers monitored do not require any special maintenance or other measures.

However, the user sometimes forgets to fill the radiator with water, or fluid leaks may take place, with the result that the resistor is no longer immersed in the liquid and thus overheats, because when the liquid medium which conveys heat to the thermostat is lacking, the thermostat fails to detect the temperature increase in time.

In such cases the resistor is liable to bum, as the thermostats designed to date do not directly monitor the temperature of the resistor but that of the fluid, which means that they are totally ineffective in this situation.

For this reason, a thermofuse is coupled to the resistor, and bums when the resistor temperature reaches excessive values.

This problem, which at the very least involves the nuisance of having the electrical resistor replaced, preferably by specialist personnel, with all the resulting costs, can give rise to potentially dangerous situations because of the possibility that short-circuits, burning or other dangerous events may take place with unpredictable consequences. Moreover, US 4,460,944, which refers to a pool light unit assembly, uses a heat-conducting strip similar to the strip of the present invention, but not for an identical purpose.

The aim of this invention is to eliminate the said drawbacks with an improved thermostating device which uses a special heat conductor to convey heat from the resistor to the thermostat whether or not fluid is present, though without remaining in direct contact with the resistor.

As a result of this solution, all possibility of overheating of the resistor in the heat exchangers is prevented, thus guaranteeing the maximum safety of the unit.

The purposes and advantages mentioned above are achieved with the use of a thermostatically controlled heating device for radiators according to claim 1.

Further characteristics and details of the invention will appear more clearly from the following description, given by way of example but not of limitation, by reference to the annexed drawings, in which:

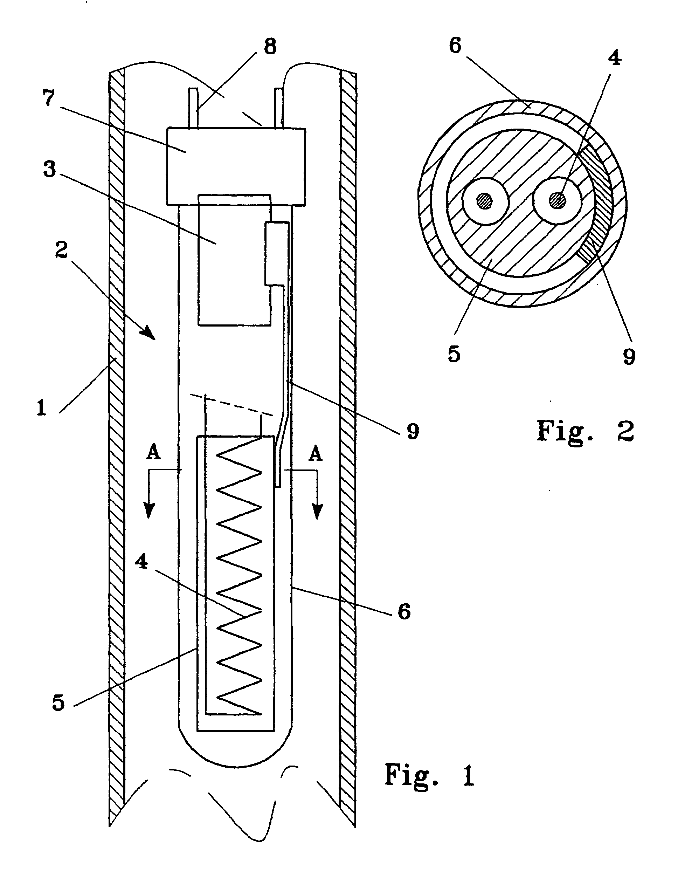

- figure 1 schematically represents the thermostating device in accordance with the invention
- figure 2 is a cross-section of the device along line A-A shown in figure 1
- figure 3 is a cross-section of a different version of the device;
- figures 4 and 5 are cross-sections along lines B-B and C-C respectively, of fig. 3.

In the annexed figures, no. 1 indicates a column of the radiator or other similar heat-producing apparatus into which a heating element fitted with the thermostating device forming the subject of the invention is inserted. A fluid, which may simply be water, usually flows in the column, which contains an electrical immersion resistor indicated as 2. The said resistor is powered by mains current and controlled by a thermostat 3 which, as mentioned, activates or deactivates the electric current on the basis of the preset operating temperature. In particular, resistor 2 comprises a resistive coil 4 housed in a ceramic core 5, which is inserted in a protective body or casing 6 fitted at one end with a base 7 with contacts 8 for connection to the mains power supply. The special feature of the invention is that it comprises a strip 9 made of a heat-conducting material, for example a metal with a high heat transmission capacity such as copper or the like; the said metal strip has a basically elongated shape, and runs from the heating element, in particular core 5, to thermostat 3. Metal strip 9 comes into contact with casing 6, which is usually made of metal, and has a length sufficient to leave a distance of a few centimetres between thermostat 3 and heating body 5.

With this solution, under normal operating conditions, ie. when the resistor is immersed in the fluid, the heat absorbed by the metal strip from body 5 is yielded to the liquid in the radiator through the wall of casing 6 before reaching the thermostat, which thus detects the temperature of the liquid normally. In the absence of liquid in the radiator, the heat conveyed by the metal strip is not dispersed and therefore reaches the thermostat, which detects a temperature increase and cuts off the power to resistive coil 4.

The heat-regulation device described is therefore active not only if it is completely immersed in water, ie. under optimum operating conditions, but also in the event of leakage or total lack of fluid in the radiator.

In this case, in which conventional thermostating apparatus is inefficient, the thermostat can control the temperature because heat from the resistor reaches it via metal strip 9, and the resistor will remain intact even if it is unable to produce heat.

The use of the thermostating device described prevents all possibility of overheating of the resistor in the heat exchangers, thus guaranteeing the maximum safety of the unit as a result of constant control of the operating temperature of the resistor regardless of the presence or absence of heating fluid.

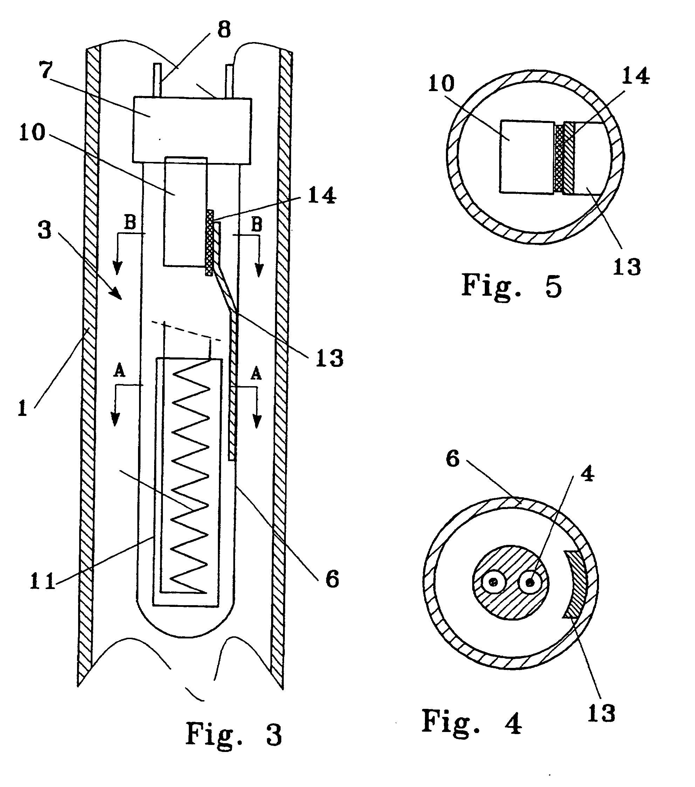

The above description relates to a class 1 thermostating device. However, it is obviously also applicable to class 2 devices like the one shown in figure 3, in which no. 10 indicates the thermostat, 11 indicates the heating element, and 13 indicates the metal strip which runs from the heating element to the thermostat, with the insertion of a suitable layer of electrically insulating material 14.

## Claims

1. A thermostatically controlled heating device (2) for radiators, of the type comprising at least one heating element (5) such as a resistive coil (4) and at least one thermostat (3), **characterised in that** it includes at least one heating conducting element (9) designed to conduct heat from the said heating element (5) to the said thermostat (3), the length of the said heating conducting element (9) being such as to leave a sufficient distance between the said heating element (5) and the said thermostat (3) to ensure that, under normal operation, the heat collected by the said heating conducting element (9) is dispersed in the fluid contained in the radiator (1).

2. A thermostatically controlled heating device (2) as claimed in the preceding claim, **characterised in that** the said heat conducting element (9) is constituted by a metal strip (9) in contact with the casing (6) of the thermostatically controlled heating device (2), which casing (6) contains the thermostat (3) and the heating element (5), whereby one end of the metal strip (9) is also in contact with the said heating element (5) or located close to it and the other end is connected to the thermostat (3).

3. A thermostatically controlled heating device (2) as claimed in any of the preceding claims, **characterised in that** the metal strip (9) is situated between the said thermostat (3) and the said heating element (5) and has a length sufficient to disperse the heat collected by the said strip (9) into the fluid under normal operating conditions.

4. A thermostatically controlled heating device (2) as claimed in any of the preceding claims, **characterised in that** the said strip (9) is made of a heat-conducting material, for example a metal with a high heat transmission capacity such as copper or the like, and has a basically elongated shape.

## Patentansprüche

1. Themostat-gesteuerte Heizvorrichtung (2) für Heizkörper, in der Bauart, welche mindestens ein Heizelement (5) wie z. B. eine Wiederstandsspule (4) und mindestens einen Thermostaten (3) umfasst, **dadurch gekennzeichnet, dass** sie mindestens ein Wärmeleitelement (9) umfasst, das dafür vorgesehen ist, Wärme von dem genannten Heizelement (5) zu dem genannten Thermostat (3) zu leiten, wobei die Länge des genannten Wärmeleitelements (9) derart ist, um eine ausreichende Entfernung zwischen dem genannten Heizelement (5) und dem genannten Thermostaten (3) zu lassen, um sicherzustellen, dass im normalen Betrieb die von dem genannten Wärmeleitelement (9) gesammelte Wärme in der im Heizkörper (1) enthaltenen Flüssigkeit verbreitet wird.

2. Themostat-gesteuerte Heizvorrichtung (2) wie im vorhergehenden Anspruch beansprucht, **dadurch gekennzeichnet, dass** das genannte Wärmeleitelement (9) aus einem in Kontakt mit dem Gehäuse (6) der Themostat-gesteuerten Heizvorrichtung (2) stehenden Metallstreifen (9) besteht, wobei das Gehäuse (6) den Thermostaten (3) und das Heizelement (5) enthält, wobei ein Ende des Metallstreifens (9) auch in Kontakt mit dem genannten Heizelement (5) steht oder in dessen Nähe angeordnet ist und das andere Ende mit dem Thermostaten (3) verbunden ist.

3. Themostat-gesteuerte Heizvorrichtung (2) wie in einem der vorhergehenden Ansprüche beansprucht, **dadurch gekennzeichnet, dass** sich der Metallstreifen (9) zwischen dem genannten Thermostaten (3) und dem genannten Heizelement (5) befindet und eine ausreichende Länge hat, um die von dem genannten Streifen (9) gesammelte Wärme unter normalen Betriebsbedingungen in der Flüssigkeit zu verbreiten.

4. Themostat-gesteuerte Heizvorrichtung (2) wie in einem der vorhergehenden Ansprüche beansprucht, **dadurch gekennzeichnet, dass** der genannte Streifen (9) aus einem wärmeleitenden Material hergestellt ist, z. B. einem Metall mit einer hohen Wärmeleitfähigkeit wie z. B. Kupfer oder Ähnlichem, und eine im Wesentlichen langgestreckte Form hat.

## Revendications

1. Dispositif de chauffage à commande thermostatique (2) pour radiateurs, du type comprenant au moins un élément de chauffage (5) tel qu'un serpentin à résistance (4) et au moins un thermostat (3),
**caractérisé en ce qu'**il comprend au moins un élément conducteur de chaleur (9) conçu pour conduire la chaleur depuis ledit élément chauffant (5) audit thermostat (3), la longueur dudit élément conducteur de chaleur (9) étant telle qu'elle laisse une distance suffisante entre ledit élément chauffant (5) et ledit thermostat (3) pour assurer que, en fonctionnement normal, la chaleur accumulée par ledit élément conducteur de chaleur (9) est dispersée dans le fluide contenu dans le radiateur (1).

2. Dispositif de chauffage à commande thermostatique (2) selon la revendication précédente,
**caractérisé en ce que** ledit élément conducteur de chaleur (9) est constitué d'une bande métallique (9) en contact avec l'enveloppe (6) du dispositif de chauffage à commande thermostatique (2), laquelle enveloppe (6) contient le thermostat (3) et l'élément chauffant (5), tandis qu'une extrémité de la bande métallique (9) est également en contact avec ledit élément chauffant (5) ou est située à proximité de celui-ci et l'autre extrémité est raccordée au thermostat (3).

3. Dispositif de chauffage à commande thermostatique (2) selon l'une quelconque de revendications précédentes,
**caractérisé en ce que** la bande métallique (9) est située entre ledit thermostat (3) et ledit élément chauffant (5) et présente une longueur suffisante pour disperser dans le fluide dans les conditions normales de fonctionnement la chaleur accumulée par ladite bande (9).

4. Dispositif de chauffage à commande thermostatique (2) selon l'une quelconque des revendications précédentes,
**caractérisé en ce que** ladite bande (9) est réalisée à partir d'un matériau conducteur, par exemple un métal ayant une capacité élevée de transmission de chaleur tel qu'un cuivre ou analogue et présente une forme sensiblement allongée.
